# EUROPÄISCHE PATENTSCHRIFT

(11) **EP 1 004 474 B1**
(45) Veröffentlichungstag und Bekanntmachung des Hinweises auf die Patenterteilung: **21.01.2004**
(21) Anmeldenummer: 99121715.9
(22) Anmeldetag: 03.11.1999
(51) Int. Cl.: B60Q 11/00

(54) **Verfahren und Schaltungsanordnung zum Vergleich eines Eingangssignals mit unterschiedlichen Spannungsschwellen in einem elektronischen Blinkgeber**
Method and device for comparing input signals with different voltage thresholds in an electronic blinker
Méthode et circuit pour comparer des signaux d'entrée avec différents seuils de tension pour un clignoteur éléctronique

(30) Priorität: 24.11.1998 DE 19854051
(43) Veröffentlichungstag der Anmeldung: 31.05.2000
(73) Patentinhaber: ATMEL Germany GmbH, 74072 Heilbronn (DE)
(72) Erfinder: Fritz, Andreas, 74336 Brackenheim (DE); Schropp, Roland, 74235 Erlenbach (DE)

(56) Entgegenhaltungen:
- EP-A- 0 870 646
- US-A- 4 259 659
- PATENT ABSTRACTS OF JAPAN vol. 1998, no. 08, 30. Juni 1998 (1998-06-30) & JP 10 059067 A (YAZAKI CORP), 3. März 1998 (1998-03-03)

## Beschreibung

Die Erfindung betrifft ein Verfahren und eine Schaltungsanordnung zum Vergleich eines Eingangssignals mit unterschiedlichen Spannungsschwellen in einem elektronischen Blinkgeber nach dem Oberbegriff der Patentansprüche 1 und 9.

Die **Fig. 2** zeigt einen Teil einer aus der EP 0 870 646 A1 bekannten Schaltungsanordnung (Fig. 3a). Dabei handelt es sich um eine in einem elektronischen Blinkgeber enthaltene Schaltungsanordnung, mit der ein Spannungsabfall an einem Messwiderstand (Shunt) als Maß für den im Blinkschaltkreis fließenden Strom mit unterschiedlich großen Referenzspannungen verglichen wird. Anhand des Vergleichsergebnisses kann festgestellt werden, ob Blinklampen ausgefallen sind, ob zusätzliche Blinklampen angeschlossen sind (beispielsweise die eines Anhängers), oder ob ein Kurzschluss im Blinkschaltkreis vorliegt

Hierzu wird in der Schaltungsanordnung **25** ein an einem Anschlusspin **26** anliegendes Eingangssignal, bei dem es sich um den genannten Spannungsabfall handelt, beispielsweise mittels vier Komparatoren **K**_{**1**}**, K**_{**2**}**, K**_{**3**} bzw. **K**_{**4**} mit verschiedenen, als Spannungsschwellen dienenden Referenzspannungen **V**_{**ref1**}, **V**_{**ref2**}**, V**_{**ref3**} bzw. **V**_{**ref4**} verglichen, jedes Vergleichsergebnis mittels einer jeweiligen Entprellschaltung **27, 28, 29** bzw. **30** entprellt und alle entprellten Vergleichsergebnisse den Eingängen **IN**_{**1**}**, IN**_{**2**}**, IN**_{**3**} bzw. **IN**_{**4**} einer Steuereinheit **31** zugeführt. Durch die Referenzspannungen **V**_{**ref1**}**, V**_{**ref2**}, **V**_{**ref3**} bzw. **V**_{**ref4**} wird demnach jeweils eine Diskretisierungsstufe gebildet. Die Referenzspannungen **V**_{**ref1**}**, V**_{**ref2**}**, V**_{**ref3**} und **V**_{**ref4**} werden auf eine beliebige Art und Weise erzeugt, beispielsweise durch jeweilige Abgriffe in einer zwischen einem Anschluss **32** und einem Bezugspotential **34,** vorzugsweise dem Erdpotential, angeordneten Spannungsteilerschaltung 33, wobei die Widerstandswerte und die Anordnung der einzelnen Widerstände dem gewünschten Spannungswert entsprechend gewählt werden müssen.

Diese Schaltungsanordnung weist den Nachteil auf, dass für jede Diskretisierungsstufe ein eigener Komparator und eine eigene, dem jeweiligen Komparator nachgeschaltete Entprellschaltung notwendig sind. Werden mehrere Eingangssignale auf diese Art und weise mit jeweiligen Referenzspannungen verglichen, sind zusätzliche und vielfach identische Schaltungsteile notwendig.

Es ist deshalb Aufgabe der Erfindung, die beschriebene Schaltungsanordnung zu verbessern und ein Verfahren anzugeben, um auf einfache Art und Weise einen Spannungsabfall mit unterschiedlich großen Referenzspannungen zu vergleichen, wobei identische Schaltungsteile weitgehend vermieden werden.

Diese Aufgabe wird durch ein Verfahren und eine Schaltungsanordnung hierfür gemäß den Ansprüchen 1 und 9 gelöst.

Die Vorteile der Erfindung liegen darin, dass durch die Verwendung nur eines Komparators und nur einer Entprellschaltung für mehrere Eingangssignale erhebliche Chipfläche auf einem Integrierten Schaltkreis eingespart wird, wodurch Herstellkosten niedrig gehalten werden. Außerdem wird die Stromaufnahme niedrig gehalten.

Vorteilhafte Weiterbildungen der Erfindung sind in den unteransprüchen beschrieben.

Ein Ausführungsbeispiel der Erfindung ist nachstehend ausführlich erläutert und anhand der Figuren dargestellt.

Es zeigen
- Fig.1:: ein Prinzipschaltbild eines Blinkgebers mit einem Integrierten Schaltkreis,
- Fig. 2:: ein Prinzipschaltbild eines Teils des Integrierten Schaltkreises nach dem Stand der Technik,
- Fig. 3:: ein Blockschaltbild der erfindungsgemäßen Schaltungsanordnung,
- Fig.4:: ein Prinzipschaltbild eines Teils der Schaltungsanordnung nach Fig. 3,
- Fig. 5:: ein Prinzipschaltbild eines weiteren Teils der Schaltungsanordnung nach Fig. 3 und
- Fig. 6a-b:: den (zeitlichen) Zusammenhang von unterschiedlich hohen Spannungsschwellen und den zugehörigen Zeitpunkten einer Messung.

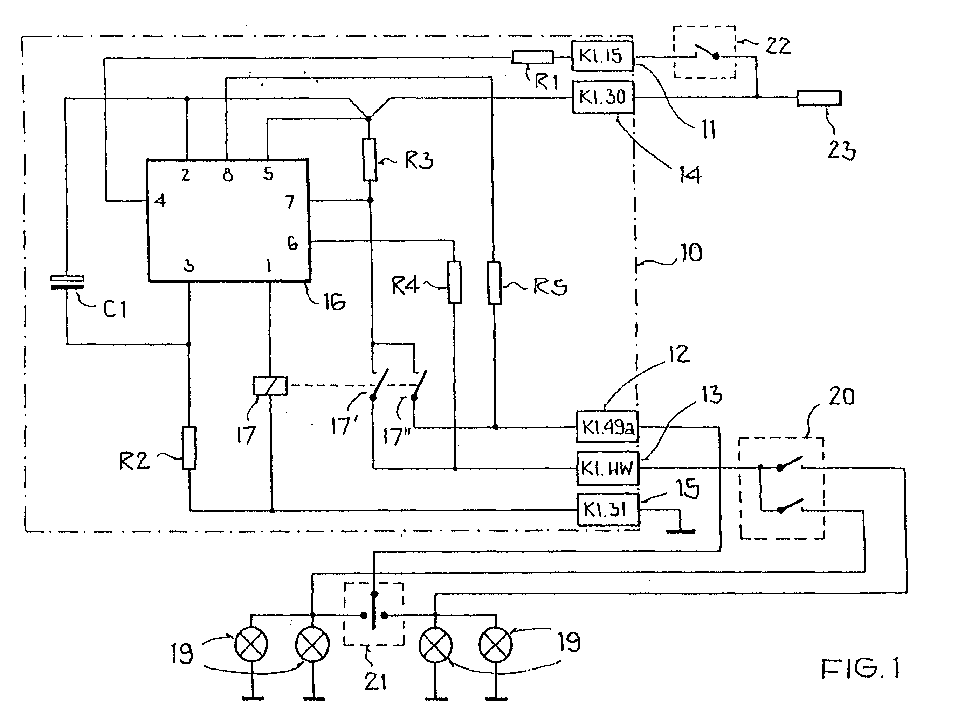

Gemäß des in **Fig. 1** dargestellten Prinzipschaltbildes weist ein elektronischer Blinkgeber **10** drei Steuereingänge auf: Zündung **11** (Klemme 15), Richtungsblinkschalter **12** (Klemme 49a) und Warnblinkschalter **13** (Klemme HW); als weitere Klemmen neben diesen drei Steuereingängen sind noch der Batterieanschluss **14** (Klemme 30) und der Bezugspotentialanschluss **15** (Klemme 31) vorgesehen. Ein Integrierter Schaltkreis **16** des elektronischen Blinkgebers 10 besitzt acht externe Anschlusspins **1** bis **8**, das heißt er kann in einem achtpoligen DIP-Gehäuse oder SO8-Gehäuse realisiert werden. Als Anschlusspins sind beispielsweise der sogenannte Relaistreiberausgang **1** (an den außer einem Relais auch beispielsweise das Gate eines Power-MOSFETS oder IGBTs angeschlossen sein kann), ein Anschluss **2** für die Versorgungsspannung **V**_{**s**}**,** ein Anschluss **3** für das Bezugspotential des integrierten Schaltkreises **16,** ein Eingang **4** für die Klemme **15** (Zündung), ein Warnblinkeingang **6,** ein Messeingang **7,** ein Eingang **5,** der mit der Versorgungsspannung verbunden ist und das Bezugspotential für den Messeingang **7** darstellt und ein Richtungsblinkeingang **8** vorgesehen.

Zwischen den Anschlüssen **2** und **3** ist ein Kondensator **C**_{**1**} angeordnet, der bei negativen Störspannungen als Stützkapazität wirkt. Ohmsche Widerstände **R**_{**1**}**, R**_{**2**}**, R**_{**4**} bzw. **R**_{**5**} sind zum Schutz des Integrierten Schaltkreises **16** gegen Störimpulse und Verpolung in den Zuleitungen zu den Anschlüssen **4, 3, 6** bzw. **8** angeordnet. Ein niederohmiger Widerstand **R**_{**3**} (mit z. B. 20 mΩ) wird als Messwiderstand (Shunt) verwendet.

An den Anschluss **1** des Integrierten Schaltkreises **16** ist als Schaltelement ein Blinkrelais **17** angeschlossen, dessen zwei Relaiskontakte **17'** und **17"** Blinklampen **19** über einen Warnblinkschalter **20** oder über einen Richtungsblinkschalter **21** aktivieren. Zusätzlich sind in der Fig. 1 noch der an Klemme **15** angeschlossene Zündschalter **22** und die Batterie **23** des Fahrzeugs dargestellt, wobei die genaue Beschaltung des Warnblinkschalters **20,** der die Blinklampen **19** auch bei ausgeschaltetem Zündschalter **22** aktivieren können muss, nicht dargestellt ist.

Die am Messwiderstand **R**_{**3**} abfallende Spannung ist letztlich ein Index dafür, wieviele Blinklampen **19** angeschlossen sind, ob zusätzliche Blinklampen **19** beispielsweise eines Anhängers angeschlossen sind, ob eine oder mehrere der Blinklampen **19** ausgefallen sind, oder ob ein Kurzschluss im Blinkschaltkreis vorliegt.

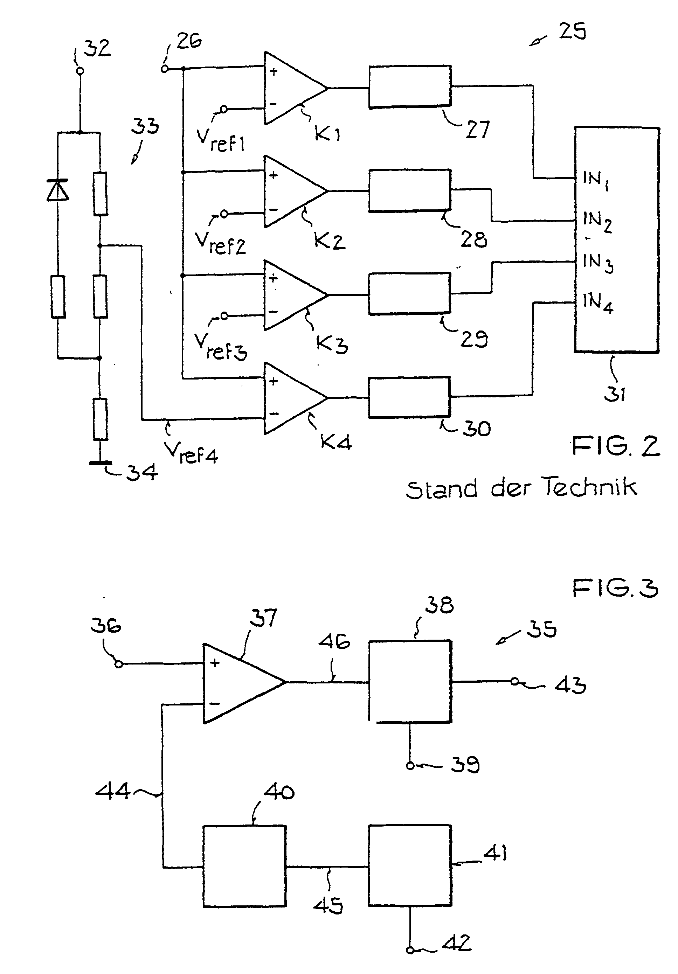

Im Integrierten Schaltkreis **16** ist nun ein elektronischer Schaltungsteil enthalten, der diese am Messeingang **7** liegende Spannung mit unterschiedlichen Referenzspannungen vergleicht und das vergleichsergebnis einer im Integrierten Schaltkreis **16** enthaltenen, internen Steuereinheit **31** (Fig. 2) zuführt. Ein derartiger elektronischer Schaltungsteil nach dem Stand der Technik ist in Fig. 2 dargestellt und wurde bereits beschrieben. Fig. 3 zeigt hierfür eine neuartige elektronische Schaltung.

Fig. 3 zeigt ein Prinzipschaltbild 35 der erfindungsgemäßen Schaltungsanordnung, bestehend aus einem Signaleingang **36** (entspricht dem Anschlusspin **7** in Fig. 1), einem Komparator **37**, einer digitalen Entprellschaltung **38** mit Oszillatoreingang **39**, einer Schwellengeneratorschaltung **40**, einer digitalen Steuereinheit **41** mit einem Oszillatoreingang **42** und einem Signalausgang **43.** Dem nichtinvertierenden Eingang des Komparators **37** wird das am Signaleingang **36** anliegende Eingangssignal zugeführt, seinem invertierenden Eingang mittels einer Verbindungsleitung **44** eine Schwellenspannung als Ausgangssignal der Schwellengeneratorschaltung **40** (wobei die Beschaltung der Eingänge des Komparators **37** bei Bedarf auch umgekehrt sein kann). Der Eingang der Schwellengeneratorschaltung **40** ist mittels einer Verbindungsleitung **45** mit dem Ausgang der Steuereinheit **41** verbunden.

Über ihren Oszillatoreingang 42 wird der Steuereinheit 41 ein Signal, beispielsweise ein Taktsignal, zugeführt. Das Ausgangssignal des Komparators **37** wird mittels einer Verbindungsleitung **46** dem Eingang der Entprellschaltung **38** zugeführt. Über ihren Oszillatoreingang **39** wird der Entprellschaltung **38** ein Taktsignal zugeführt, das nicht mit dem am Oszillatoreingang **42** liegenden Taktsignal identisch sein muss. Der Ausgang der Entprellschaltung 38 stellt gleichzeitig den Signalausgang 43 der Schaltungsanordnung 35 dar.

Am Signaleingang **36** liegt als Mess-Signal eine Spannung an, die im Komparator **37** mit einer an seinem invertierenden Eingang anliegenden Schwellenspannung verglichen wird. Dabei kann die Größe der Spannung unterschiedlich sein, und bei bestimmten Spannungswerten werden unterschiedliche Aktionen ausgelöst. Daher muss die Spannung mit unterschiedlichen Spannungsschwellen verglichen werden, die, gesteuert durch eine in der digitalen Steuereinheit 41 enthaltene Ablaufsteuerung, in der Schwellengeneratorschaltung **40** erzeugt werden, wie noch ausführlich erläutert wird. Das Vergleichsergebnis am Ausgang des Komparators **37** wird in der digitalen Entprellschaltung **38** entprellt, wie ebenfalls noch ausführlich erläutert wird, und dem Signalausgang **43** zugeführt. Das dem Signalausgang **43** zugeführte Ausgangssignal wird zur weiteren Verarbeitung einem nachgeschalteten elektronischen Schaltungsteil zugeführt, beispielsweise einer Steuereinheit (vergleichbar der Steuereinheit **31** in Fig. 2).

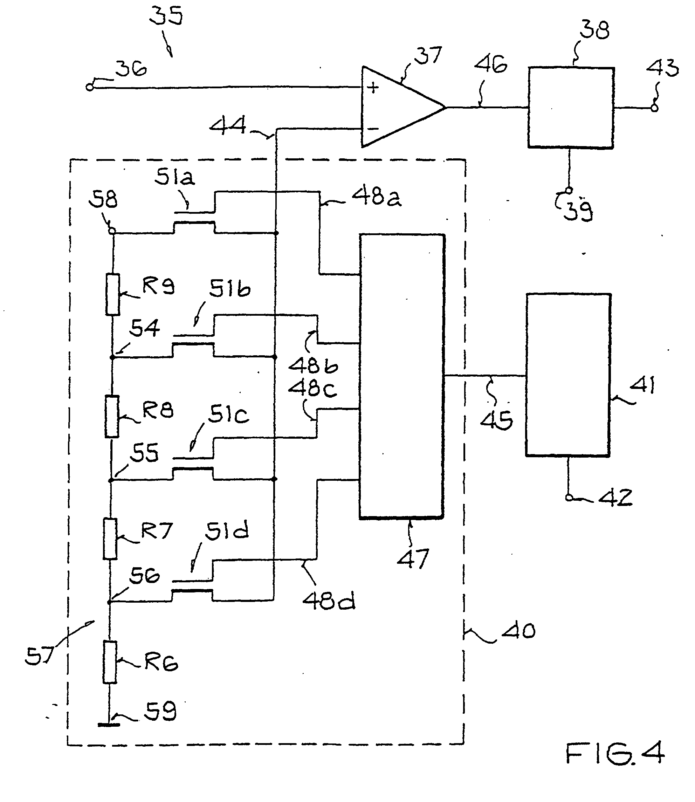

Die **Fig. 4** zeigt ein ähnliches Prinzipschaltbild wie Fig. 3, jedoch mit dem detaillierten Aufbau der Schwellengeneratorschaltung **40.** Alle weiteren Schaltungsteile sind identisch mit denen der Fig. 3. Die Verbindungsleitung **45** führt das Ausgangssignal der digitalen Steuereinheit **41** einer weiteren, internen Steuereinheit **47** innerhalb der Schwellengeneratorschaltung **40** zu. Diese interne Steuereinheit **47** steuert mittels verbindungsleitungen **48a, 48b, 48c** und **48d** die Steuereingänge von beispielsweise vier Transmission-Gates oder Analogschaltern **51a, 51b, 51c** und **51d** an, wobei immer nur ein Analogschalter eingeschaltet ist.

Der Ausgang jedes Transmission-Gates **51a, 51b, 51c** und **51d** ist mit der Verbindungsleitung **44** verbunden, der jeweilige Eingang mit jeweiligen Abgriffen **54**, **55** und **56** einer aus ohmschen Widerständen **R**_{**6**}**, R**_{**7**}**, R**_{**8**} und **R**_{**9**} bestehenden elektrischen Widerstandskette **57**. Dem ersten Anschluss **58** der Widerstandskette 57 wird optional eine externe oder interne Referenzspannung zugeführt, der andere Anschluss **59** ist beispielsweise mit einem Bezugspotential (Erdpotential oder ein anderes Spannungspotential) verbunden. Die Widerstandskette **57** dient zur Erzeugung unterschiedlicher Referenzspannungen, die über die Transmission-Gates **51a, 51b, 51c** und **51d** und über die Verbindungsleitung **44** als Spannungsschwellen dem invertierenden Eingang des Komparators **37** zugeführt werden.

Welche der in der Widerstandskette **57** erzeugte Referenzspannung dem invertierenden Eingang des Komparators **37** zugeführt wird, bestimmt zunächst die in der digitalen Steuereinheit **41** enthaltene Ablaufsteuerung, indem sie mittels der Verbindungsleitung **45** der internen Steuereinheit **47** ein Signal zuführt, und diese wiederum einen der Transmission-Gates **51a, 51b, 51c** oder **51d** durchschaltet und die übrigen Transmission-Gates sperrt, so dass dadurch die gewünschte Spannungsschwelle am invertierenden Eingang des Komparators **37** anliegt.

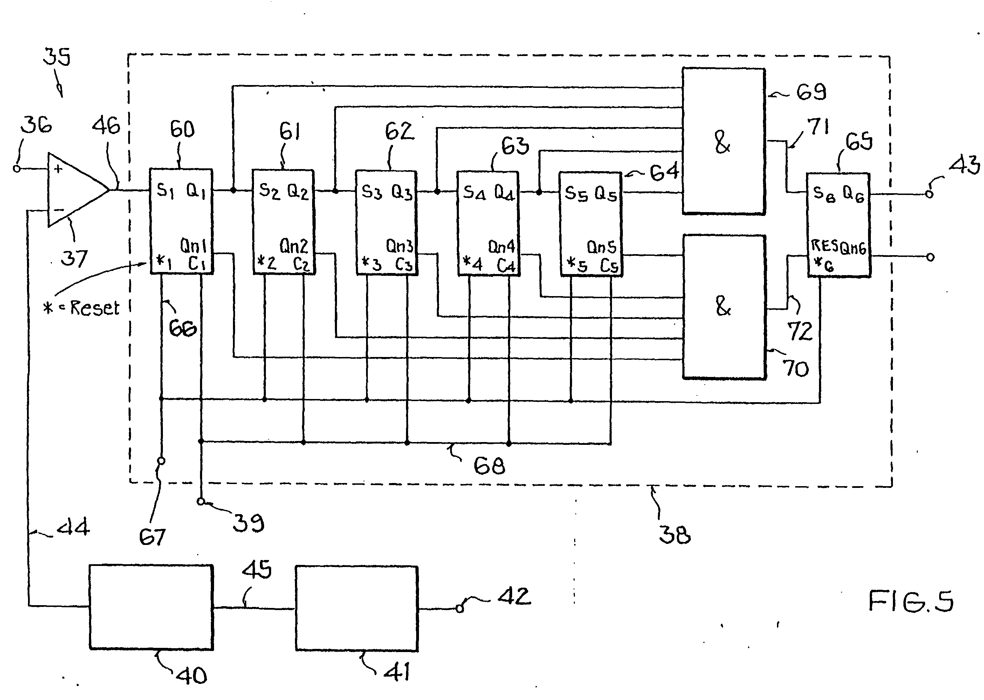

Die **Fig. 5** zeigt auch ein ähnliches Prinzipschaltbild wie Fig. 3, jedoch mit dem detaillierten Aufbau der digitalen Entprellschaltung **38.** Alle weiteren Schaltungsteile sind identisch mit denen der Fig. 3 und 4. Die Entprellschaltung **38** enthält beispielsweise fünf in Serie geschaltete D-Flip-Flops **60, 61, 62, 63** und **64** und ein RS-Flip-Flop 65, wobei jedes D-Flip-Flop **60 - 64** jeweils einen Eingang **S**_{**1**} bis **S**_{**5**}**,** einen Reset-Eingang **Reset1** bis **Reset5,** einen Takteingang (Clock) **C**_{**1**} bis **C**_{**5**} und zwei komplementäre Ausgänge **Q**_{**1**} bis **Q**_{**5**} und **Qn**_{**1**} bis **Qn**_{**5**} aufweist. Das RS-Flip-Flop **65** weist einen Set-Eingang **S**_{**6**} auf, einen Reset-Eingang **Res** und einen Reset-Eingang **Reset6** auf. Jeder Reset-Eingang **Reset1** bis **Reset6** ist mittels einer Verbindungsleitung **66** mit einem Anschluss **67** verbunden, dem zu bestimmten Zeitpunkten, beispielsweise beim Einschalten (Power-On-Reset), ein Reset-Signal zugeführt wird. Jeder Takteingang **C**_{**1**} bis **C**_{**5**} ist mittels einer Verbindungsleitung **68** mit dem Oszillatoreingang **39** verbunden.

Weiterhin enthält die digitale Entprellschaltung **38** zwei UND-Gatter **69** und **70** mit jeweils fünf Eingängen, wobei der Ausgang des UND-Gatters **69** mittels einer Verbindungsleitung **71** mit dem Set-Eingang **S**_{**6**}**,** und der Ausgang des UND-Gatters **70** mittels einer verbindungsleitung **72** mit dem zweiten Reset-Eingang **Res** des RS-Flip-Flops **65** verbunden ist. Der Ausgang **Q**_{**6**} des RS-Flip-Flops **65** stellt gleichzeitig den Ausgang **43** der digitalen Entprellschaltung **38** und der gesamten Schaltungsanordnung **35** dar.

Ein Ausgangssignal des Komparators **37** wird innerhalb der digitalen Entpreilschaltung **38** als logische "1" (positives Signal) oder logische "0" (negatives Signal) zuerst dem Eingang **S**_{**1**} des D-Flip-Flops **60** zugeführt. Beim nächsten Takt am Oszillatoreingang **39** wird das am Eingang **S**_{**1**} anstehende Signal entweder dem Ausgang **Q**_{**1**} oder dem Ausgang **Qn**_{**1**} zugeführt, und zwar abhängig davon, ob es sich um ein positives oder negatives Signal handelt: Ein am Ausgang **Q**_{**1**} anstehendes, positives Signal wird gleichzeitig dem Eingang **S**_{**2**} des D-Flip-Flops **61** und einem der Eingänge des UND-Gatters **69** zugeführt, und ein am Ausgang **Qn**_{**1**} anstehendes, negatives Signat wird lediglich einem der Eingänge des UND-Gatters **70** zugeführt.

Dieser Vorgang wiederholt sich analog bei jedem der nachgeschalteten D-Flip-Flops **61, 62, 63** und **64.** Die geschilderte Funktion entspricht der eines bekannten Schieberegisters. Bei fünf aufeinanderfolgenden positiven Signalen am Eingang **S**_{**1**} liegt nach insgesamt fünf Takten an allen fünf Eingängen und daher auch am Ausgang des UND-Gatters **69** ein positives Signal an, das mittels der verbindungsleitung **71** dem Set-Eingang **S**_{**6**} zugeführt wird und das RS-Flip-Flop **65** setzt. Beim nächsten Takt steht dann am Ausgang **Q**_{**6**} bzw. **43** ein positives Signal an.

Somit liegt am Signalausgang **43** nur dann ein positives bzw. negatives Signal (logisch "1" bzw. "0") an, wenn am Ausgang des Komparators **37** jeweils für fünf aufeinanderfolgende Zeittakte ein positives bzw. negatives Signal anliegt, so dass bei Umschaltvorgängen (Kontaktprellen) und anderen, undefinierten Schaltzuständen, wenn in unregelmäßiger Reihenfolge positive und negative Signale am Ausgang des Komparators **37** anstehen, der momentane zustand erhalten bleibt, bis sich das Signal am Eingang **S**_{**1**} stabilisiert hat. Das am Signalausgang **43** anliegende Signal bleibt demnach bei weniger als fünf aufeinanderfolgenden zeittakten dauernden, gegensinnigen Signalen erhalten und ist dadurch entprellt.

Es gibt zwei Möglichkeiten, das am Ausgang **43** anstehende, positive Signal zurückzusetzen. Erstens kann dem internen Reset-Anschluss **67** ein Signal zugeführt werden, das alle D-Flip-Flops **60** bis **64** und das RS-Flip-Flop **65** zurücksetzt. Die zweite Möglichkeit besteht darin, dass am Eingang **S**_{**1**} für fünf Zeittakte eine logische "0'' anliegt. Dadurch liegt an allen fünf Eingängen und somit auch am Ausgang des UND-Gatters **70** ein positives Signal, das mittels der Verbindungsleitung **72** dem zweiten Reset-Eingang Res des RS-Flip-Flops **65** zugeführt wird. Dadurch wird das RS-Flip-Flop **65** zurückgesetzt, so dass am Ausgang **Q**_{**6**}**,** entsprechend dem Signalausgang **43,** eine logische "0" anliegt (das dann am Ausgang **Qn**_{**6**} liegende, positive Signal wird in der vorliegenden Anwendung nicht weiter verwendet).

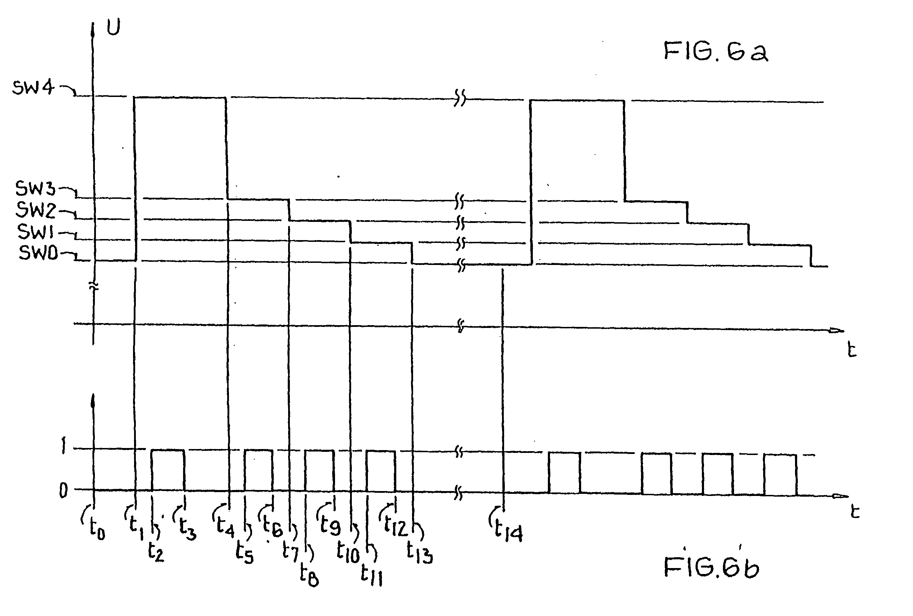

Den **Fig. 6a** und **6b** liegt das Prinzipschaltbild **35** der Fig. 3 zugrunde, bei dem während mehrerer, aufeinanderfolgender Messzyklen eine am Signaleingang **36** anliegende Spannung mit unterschiedlichen, in der Schwellengeneratorschaltung **40** erzeugten Spannungsschwellen verglichen wird. Dabei zeigt **Fig. 6a** den zeitlichen Verlauf von verschiedenen spannungsschwellen SW1 bis SW4, ausgehend von einer geeigneten Spannung SW0, und **Fig. 6b** die Zeitpunkte, bei denen nach einer Entprellung ein Vergleich zweier Spannungen stattfindet (wobei eine Spannung das Abbild des durch den Messwiderstand **R**_{**3**} [Fig.1] fließenden Stroms darstellt).

Ein erster Messzyklus beginnt beispielsweise zum Zeitpunkt **t**_{**0**}**;** der Schwellengenerator **40** ist vorzugsweise auf eine geeignete Spannung SW0 eingestellt. Beim normalen Blinken nach rechts oder links, das heißt in der Betriebsart "Richtungsblinken", wird zu einem Zeitpunkt **t**_{**1**} der Schwellengenerator **40** von der Steuereinheit **41** veranlasst, ausgehend von der anfangs eingestellten Spannung SW0 eine höchste Spannungsschwelle SW4 einzustellen. Bezogen auf die Fig. 1 soll anhand dieser Spannungsschwelle SW4 geprüft werden, ob im Blinkschaltkreis ein Kurzschluss vorliegt und folglich durch den Messwiderstand **R**_{**3**} ein (zu) hoher Strom fließt, der den Integrierten Schaltkreis **16,** das Blinkrelais **17,** die Verbindungsleitungen oder andere Schaltungsteile zerstören könnte. Die Spannungsschwelle SW4, bei der der größtmögliche Strom durch den Messwiderstand **R**_{**3**} fließt, wird auch als "Kurzschluss-Schwelle" bezeichnet.

Zu einem nachfolgenden Zeitpunkt **t**_{**2**} wird die Messung des Spannungsabfalls an **R**_{**3**} gestartet. In der Zeitspanne zwischen **t**_{**2**} und **t**_{**3**} erfolgt zuerst in der Entprellschaltung **38** die Entprellung des vom Komparator **37** erzeugten Ausgangssignals, weshalb diese Zeitspanne als Entprellzeit (Debounce-Zeit) bezeichnet wird. Zum Zeitpunkt **t**_{**3**} erfolgt dann die Messung der am Messwiderstand **R**_{**3**} abfallenden Spannung und damit des durch **R**_{**3**} fließenden Stromes und die Auswertung im Integrierten Schaltkreis **16.** Überschreitet die am Messwiderstand **R**_{**3**} zum Zeitpunkt **t**_{**3**} gemessene Spannung die Spannungsschwelle SW4, deutet dies auf einen Kurzschluss im Blinkschaltkreis hin. Daraufhin wird das Blinkrelais **17** deaktiviert und nach einer vorgegebenen Zeit der Spannungsabfall an **R**_{**3**} erneut gemessen. Solange ein Kurzschluss vorliegt, wird die Betriebsart "Kurzschluss" beibehalten, bei der das Blinkrelais **17** nur für eine sehr kurze Zeit aktiviert wird, die ausreicht, um den Spannungsabfall am Messwiderstand **R**_{**3**} messen zu können.

Zum Zeitpunkt **t**_{**4**} wird eine neue Spannungsschwelle SW3 eingestellt, die wesentlich niedriger ist als die Kurzschluss-Schwelle SW4. Die Spannungsschwelle SW3 ist ein Index dafür, dass an den Blinkschaltkreis zusätzlich weitere Blinklampen **19** (Fig. 1), beispielsweise die eines Anhängers, angeschlossen sind (Betriebsart "Anhängerbetrieb"). Wie bei der Kurzschluss-Schwelle wird zwischen Zeitpunkten **t**_{**5**} und **t**_{**6**} zuerst das Ausgangssignal des Komparators **37** entprellt, bevor zum Zeitpunkt **t**_{**6**} die Messung der am Messwiderstand **R**_{**3**} abfallenden Spannung erfolgt. Übersteigt die gemessene Spannung die Spannungsschwelle SW3, ohne dass zuvor die Kurzschluss-Schwelle SW4 überschritten wurde, wird die Betriebsart "Anhängerbetrieb" eingeschaltet.

Beim nachfolgenden Zeitpunkt **t**_{**7**} wird eine Spannungsschwelle SW2 eingestellt, die niedriger ist als die Spannungsschwelle SW3. Diese Spannungsschwelle SW2 ist vorteilhaft ein Index dafür, dass alle angeschlossenen Blinklampen **19** funktionieren und keine zusätzlichen Blinklampen **19** dem Blinkschaltkreis hinzugefügt und keine Blinklampen **19** ausgefallen sind. Ab dem Zeitpunkt **t**_{**8**} bis zum Zeitpunkt **t**_{**9**} erfolgt die Entprellung, zum Zeitpunkt **t**_{**9**} erfolgt die Messung des Spannungsabfalls am Messwiderstand **R**_{**3**}**.** Liegt die Spannung an **R**_{**3**} zwischen SW3 und SW2, ohne dass zuvor die Kurzschluss-Schwelle SW4 überschritten wurde, bleibt die normale Betriebsart "Richtungsblinken" bzw. "Warnblinken" erhalten.

Schließlich wird zum Zeitpunkt **t**_{**10**} die letzte und niedrigste Spannungsschwelle SW1 eingestellt, die vorzugsweise ein Index dafür ist, dass eine oder mehrere Blinklampen **19** ausgefallen sind und daher ein zu niedriger Strom im Blinkschaltkreis fließt. Die Entprellung wird zwischen den Zeitpunkten **t**_{**11**} und **t**_{**12**}**,** und die Spannungsmessung an **R**_{**3**} zum Zeitpunkt **t**_{**12**} durchgeführt. Liegt die Spannung am Shunt **R**_{**3**} zwischen SW2 und SW1 oder unterhalb SW1, sind eine oder mehrere Blinklampen **19** ausgefallen, und die Betriebsart "Lampenausfall" wird eingeschaltet, bei der dem Fahrer akustisch bzw. optisch durch eine erhöhte Blinkfrequenz des Blinkrelais **17** (Fig. 1) bzw. der Blinkkontroll-Leuchte ein Lampenausfall mitgeteilt wird.

Zum Zeitpunkt **t**_{**13**} schaltet der Schwellengenerator **40** auf die anfangs eingestellte Spannung SW0 zurück, anschließend erfolgt eine sogenannten "Dunkelzeit" mit abgeschalteten Blinklampen **19,** und zum Zeitpunkt **t**_{**14**} beginnt ein neuer Messzyklus. Die Entprellzeiten zwischen **t**_{**2**} und **t**_{**3**}**,** zwischen **t**_{**5**} und **t**_{**6**}**,** zwischen **t**_{**8**} und **t**_{**9**} und zwischen **t**_{**11**} und **t**_{**12**} betragen vorteilhaft jeweils 5 ms.

Das erfindungsgemäße Verfahren und die erfindungsgemäße Schaltungsanordnung eignen sich insbesondere zum Einsatz in einem elektronischen Blinkgeber, bei dem eine an einem Messwiderstand abfallende Spannung mit unterschiedlichen Spannungsschwellen verglichen wird und anhand des Vergleichsergebnisses auf zusätzlich angeschlossene Blinklampen, auf einen Kurzschluss im Blinkschaltkreis oder auf einen Blinklampenausfall geschlossen wird.

## Patentansprüche

1. Verfahren zum Vergleich eines Eingangssignals mit unterschiedlichen Spannungsschwellen (SW1, SW2, SW3, SW4) in einem Blinkschaltkreis mit angeschlossenen Blinklampen (19), **gekennzeichnet durch folgende Verfahrensschritte:**
a) eine Steuereinheit (41) führt einer Schwellengeneratorschaltung (40) Steuersignale zu,
b) **durch** jedes Steuersignal wird die Schwellengeneratorschaltung (40) Veranlasst, eine bestimmte Spannungsschwelle (SW1, SW2, SW3, SW4) zu erzeugen,
c) das Eingangssignal und die jeweilige Spannungsschwelle (SW1, SW2, SW3, SW4) werden einer Komparatorschaltung (37) zugeführt und darin miteinander verglichen und
d) das Vergleichsergebnis wird zur weiteren Verarbeitung nachgeschalteten Schaltungsteilen (38) zugeführt.

2. Verfahren nach Anspruch 1, **dadurch gekennzeichnet, dass** das Vergleichsergebnis zum Entprellen einer digitalen Entprellschaltung (38) zugeführt wird.

3. Verfahren nach Anspruch 1, **dadurch gekennzeichnet, dass** von der Schwellengeneratorschaltung (40), ausgehend von einer Spannung (SW0), vier unterschiedlich hohe Spannungsschwellen (SW1, SW2, SW3, SW4) erzeugt werden.

4. verfahren nach Anspruch 3, **dadurch gekennzeichnet, dass** zuerst eine erste und höchste Spannungsschwelle, die Kurzschluss-Schwelle (SW4), erzeugt wird, die ein Index dafür ist, dass im Blinkschaltkreis ein Kurzschluss vorliegt.

5. Verfahren nach Anspruch 4, **dadurch gekennzeichnet, dass** bei einem detektierten Kurzschluss im Blinkschaltkreis ein Blinkrelais (17) deaktiviert wird.

6. Verfahren nach Anspruch 4, **dadurch gekennzeichnet, dass** nach der Kurzschluss-Schwelle (SW4) eine zweite Spannungsschwelle (SW3) erzeugt wird, die niedriger ist als die Kurzschluss-schwelle (SW4), und die ein Index dafür ist, dass an den Blinkschaltkreis zusätzliche Blinklampen (19) angeschlossen sind.

7. Verfahren nach Anspruch 6, **dadurch gekennzeichnet, dass** nach der zweiten Spannungsschwelle (SW3) eine dritte Spannungsschwelle (SW2) erzeugt wird, die niedriger ist als die zweite Spannungsschwelle (SW3) und die ein Index dafür ist, dass alle angeschlossenen Blinklampen (19) funktionieren und keine zusätzlichen Blinklampen (19) dem Blinkschaltkreis hinzugefügt und keine Blinklampen (19) ausgefallen sind.

8. Verfahren nach Anspruch 7, **dadurch gekennzeichnet, dass** nach der dritten Spannungsschwelle (SW2) eine vierte Spannungsschwelle (SW1) erzeugt wird, die ein Index dafür ist, dass eine oder mehrere Blinklampen (19) ausgefallen sind.

9. Schaltungsanordnung (35) zur Durchführung des Verfahrens nach den Ansprüchen 1 bis 8, mit einer in einem Blinkgeber (10) enthaltenen Steuereinheit (41), einer Schwellengeneratorschaltung (40) und einer Komparatorschaltung (37) mit zwei Eingängen, **gekennzeichnet durch** folgende Merkmale:
a) die Steuereinheit (41) ist mittels einer verbindungsleitung (45) mit der Schwellengeneratorschaltung (40) verbunden,
b) dem ersten Eingang der Komparatorschaltung (37) ist das Eingangssignal und dem zweiten Eingang das Ausgangssignal der Schwellengeneratorschaltung (40) zugeführt und
c) das Ausgangssignal der Komparatorschaltung (36) ist weiteren Schaltungsteilen (38) zugeführt.

10. Schaltungsanordnung (35) nach Anspruch 9, **dadurch gekennzeichnet, dass** das Ausgangssignal der Komparatorschaltung (36) einer digitalen Entprellschaltung (38) zugeführt ist.

## Claims

1. Method of comparing an input signal with different voltage thresholds (SW1, SW2, SW3, SW4) in a flasher circuit with connected flasher lamps (19), **characterised by** the following method steps:
a) a control unit (41) supplies control signals to a threshold generator circuit (41),
b) the threshold generator circuit (40) causes a specific voltage threshold (SW1, SW2, SW3, SW4) to be generated by each control signal,
c) the input signal and the respective voltage threshold (SW1, SW2, SW3, SW4) are fed to a comparator circuit (37) and compared with one another therein and
d) the comparison result is fed to downstream circuit parts (38) for further processing.

2. Method according to claim 1, **characterised in that** the comparison result is fed for debouncing to a digital debouncing circuit (38).

3. Method according to claim 1, **characterised in that** four voltage thresholds (SW1, SW2, SW3, SW4) of different level are generated by the threshold generator circuit (40) starting out from one voltage (SWO).

4. Method according to claim 3, **characterised in that** initially a first and highest voltage threshold, i.e. the short-circuit threshold (SW4), is generated, which is an index for the fact that a short circuit is present in the flasher circuit.

5. Method according to claim 4, **characterised in that** a flasher relay (17) is deactivated when a short circuit is detected in the flasher circuit.

6. Method according to claim 4, **characterised in that** after the short-circuit threshold (SW4) a second voltage threshold (SW3) is generated, which is lower than the short-circuit threshold (SW4) and is an index for the fact that additional flasher lamps (19) are connected with the flasher circuit.

7. Method according to claim 6, **characterised in that** after the second voltage threshold (SW3) a third voltage threshold (SW2) is generated, which is lower than the second voltage threshold (SW3) and which is an index for the fact that all connected flasher lamps (19) function and no additional flasher lamps (19) are added to the flasher circuit and no flasher lamps (19) have failed.

8. Method according to claim 7, **characterised in that** after the third voltage threshold (SW2) a fourth voltage threshold (SW1) is generated, which is an index for the fact that one or more flasher lamps (19) have failed.

9. Circuit arrangement (35) for carrying out the method according to claims 1 to 8, with a control unit (41) containing a flasher (10), a threshold generator circuit (40) and a comparator circuit (37) with two inputs, **characterised by** the following features:
a) the control unit (41) is connected with the threshold generator circuit (40) by means of a connecting line (45),
b) the input signal is fed to the first input of the comparator circuit (37) and the output signal of the threshold generator circuit (40) is fed to the second input and
c) the output signal of the comparator circuit (36) is fed to further circuit parts (38).

10. Circuit arrangement (35) according to claim 9, **characterised in that** the output signal of the comparator circuit (36) is fed to a digital debouncing circuit (38).

## Revendications

1. Procédé de comparaison d'un signal d'entrée à différents seuils de tension (SW1, SW2, SW3, SW4) dans un circuit clignotant de commutation auquel sont reliées des lampes clignotantes (19), **caractérisé par** les étapes suivantes :
a) une unité de commande (41) envoie des signaux de commande à un circuit générateur de seuils (40),
b) par chaque signal de commande le circuit générateur de seuils (40) reçoit l'ordre de générer un seuil de tension (SW1, SW2, SW3, SW4) défini,
c) le signal d'entrée et le seuil de tension respectif (SW1, SW2, SW3, SW4) sont fournis à un circuit comparateur (37) et y sont comparés l'un à l'autre, et
d) le résultat de la comparaison est transmis à des éléments de circuit (38) montés en aval pour un traitement ultérieur.

2. Procédé selon la revendication 1, **caractérisé en ce que** pour supprimer les interférences, le résultat de la comparaison est fourni à un circuit numérique suppresseur d'interférences.

3. Procédé selon la revendication 1, **caractérisé en ce qu'**à partir d'une tension (SW0), quatre seuils de tension (SW1, SW2, SW3, SW4) d'intensité différente sont générés par le circuit générateur de seuil (40).

4. Procédé selon la revendication 3, **caractérisé en ce que** l'on génère d'abord le premier et plus fort seuil de tension, le seuil de court-circuit (SW4), qui constitue l'indice d'un court-circuit dans le circuit clignotant de commutation.

5. Procédé selon la revendication 4, **caractérisé en ce que** lors de la détection d'un court-circuit dans le circuit clignotant de commutation un relais clignoteur (17) est désactivé.

6. Procédé selon la revendication 4, **caractérisé en ce qu'**après le seuil de court-circuit (SW4) est généré un deuxième seuil de tension (SW3), plus bas que le seuil de court-circuit (SW4) et qui constitue un indice que des lampes clignotantes (19) supplémentaires sont reliées au circuit clignotant de commutation.

7. Procédé selon la revendication 6, **caractérisé en ce qu'**après le deuxième seuil de tension (SW3) on génère un troisième seuil de tension (SW2), plus bas que le deuxième seuil de tension (SW3) et constituant un indice que toutes les lampes clignotantes (19) reliées fonctionnent et qu'aucune lampe clignotante supplémentaire n'a été rajoutée et qu'aucune lampe clignotante (19) n'est défectueuse.

8. Procédé selon la revendication 7,
**caractérisé en ce qu'**après le troisième seuil de tension (SW2) on génère un quatrième seuil de tension (SW1), qui constitue un indice de la défaillance d'une ou plusieurs lampes clignotantes (19).

9. Circuit (35) pour la réalisation du procédé selon les revendications 1 à 8, comprenant une unité de commande (41) contenue dans un clignoteur (10), un circuit générateur de seuils (40) et un circuit comparateur (37) à deux entrées, **caractérisé par** les caractéristiques suivantes :
a) l'unité de commande (41) est reliée au circuit générateur de seuils (40) au moyen d'un câble de liaison (45),
b) le signal d'entrée du circuit générateur de seuils (40) est fourni à la première entrée du circuit comparateur (37) et le signal de sortie de ce circuit à la deuxième entrée, et
c) le signal de sortie du circuit comparateur (36) est transmis à d'autres éléments de circuit (38).

10. Circuit (35) selon la revendication 9, **caractérisé en ce que** le signal de sortie du circuit comparateur (36) est transmis à un circuit numérique (38) suppresseur d'interférences.
